# EUROPÄISCHE PATENTSCHRIFT

(11) **EP 2 088 297 B1**
(45) Veröffentlichungstag und Bekanntmachung des Hinweises auf die Patenterteilung: **20.03.2013**
(21) Anmeldenummer: 09151579.1
(22) Anmeldetag: 29.01.2009
(51) Int. Cl.: F01P 7/16, F01N 5/02, F02B 29/04

(54) **Verfahren zur Steuerung einer Kraftfahrzeug-Verbrennungsmotor-Anordnung**
Method for controlling a motor vehicle combustion engine assembly
Procédé de commande d'un agencement de moteur à combustion de véhicule automobile

(30) Priorität: 11.02.2008 DE 102008008491
(43) Veröffentlichungstag der Anmeldung: 12.08.2009
(73) Patentinhaber: Pierburg GmbH, 41460 Neuss (DE)
(72) Erfinder: Kühnel, Hans-Ulrich, 41239, Mönchengladbach (DE); Sanders, Michael, 41564, Kaarst (DE)
(74) Vertreter: Patentanwälte ter Smitten Eberlein Rütten Partnerschaftsgesellschaft

(56) Entgegenhaltungen:
- DE-A1- 3 627 686
- DE-A1-102007 005 246
- DE-C1- 4 331 072
- JP-A- 5 001 536
- JP-A- 61 049 128

## Beschreibung

Die Erfindung bezieht sich auf ein Verfahren zur Steuerung einer Kraftfahrzeug-Verbrennungsmotor-Anordnung.

Moderne Verbrennungsmotor-Anordnungen weisen neben dem Verbrennungsmotor und einem Kühlmittelkreislauf mit einem Steuerelement zur bedarfsweisen Kühlmittelstrom-Steuerung zur Kühlung des Verbrennungsmotors weitere Aggregate und Nebenaggregate auf, die verschiedene Funktionen haben.

Sowohl bei Benzin- als auch bei Diesel-Verbrennungsmotoren wird in aller Regel ein Ladeluft-Auflader mit einer Antriebsturbine im Abgasstrom und einer Verdichterturbine auf der Ladeluftseite eingesetzt. Ferner ist zur Abgasreinigung sowohl bei Diesel- als auch bei Benzin-Verbrennungsmotoren ein Abgaskatalysator vorgesehen, dem vor dem Einlass des Abgaskatalysators ein Abgastemperatur-Sensor zugeordnet ist. Zur Verbesserung des Wirkungsgrades ist zwischen der Verdichterturbine des Ladeluft-Aufladers und dem Ladeluft-Einlass des Verbrennungsmotors ein Ladeluftkühler angeordnet, der die Ladeluft bei Bedarf kühlt. Zur Steuerung der Kühlung der Ladeluft in dem Ladeluftkühler ist dem Ladeluftkühler ein Bypass mit einem Bypass-Ventil zugeordnet. Zur Erfassung der Regelgröße, nämlich der Ladeluft-Temperatur, ist vor dem Ladeluftkühler ein Ladeluft-Temperatursensor angeordnet. Zur schnelleren Erwärmung des Motorschmiermittels ist ein Abgas-Motorschmiermittel-Wärmetauscher vorgesehen, dem ein Steuerventil zur Steuerung der Erwärmung des Motorschmiermittels in dem Wärmetauscher zugeordnet ist.

Ein wichtiges Ziel bei der Optimierung von Verbrennungsmotor-Anordnungen bzw. den Steuerungsverfahren zur Steuerung der Verbrennungsmotor-Anordnungen von Kraftfahrzeugen ist neben der Verbrauchsverringerung eine Verringerung der Schadstoffemissionen. Die mit Abstand emissionsreichste Phase ist die Phase zwischen dem Anlassen des kalten Verbrennungsmotors und dem Erreichen der Betriebstemperatur des Verbrennungsmotors und alle beteiligten Aggregate und Fluide. Bei den Verbrennungsmotor-Anordnungen nach dem Stand der Technik wird dieser Forderung durch entsprechende Steuerung und Regelung der Verbrennungsmotoranordnung Rechnung getragen.

Aus DE 4331072 C1 ist eine Motoranordnung bekannt, bei der in Abhängigkeit von der Kühlmitteltemperatur der Bypass des Ladeluftkühlers geöffnet bzw. geschlossen wird.

Auch aus DE 3627686 A1 ist bekannt, den Bypass des Ladeluftkühlers abhängig von der Kühlmitteltemperatur zu öffnen bzw. zu schließen, um die Ladelufttemperatur möglichst schnell auf ihre optimale Arbeitstemperatur zu bringen.

Alternativ zu der Bestimmung und der Auswertung der Abgastemperatur zum Feststellen der Aktivität des Abgaskatalysators kann diese auch mit zwei λ-Sonden festgestellt werden, die vor und hinter dem Abgaskatalysator angeordnet sind. Wenn die Differenz des durch die λ-Sonden bestimmten Sauerstoff-Gehaltes einen bestimmten Grenzwert überschreitet, wird angenommen, dass der Abgaskatalysator arbeitet, was Voraussetzung für die späte Warmlaufphase ist. Statt der die Abgastemperatur betreffenden Bedingung wäre die Bedingung in diesem Fall, dass die von den beiden λ-Sonden vor und hinter dem Abgaskatalysator bestimmte Differenz der Sauerstoffkonzentrationen einen Grenzwert überschreitet, der zumindest eine beginnende abgasreinigende Wirkung des Abgaskatalysators anzeigt. In jedem Fall ist die Aktivität bzw. die Nicht-Aktivität des Abgaskatalysators festzustellen.

Aufgabe der Erfindung ist es, ein Steuerungsverfahren für eine Kraftfahrzeug-Verbrennungsmotoranordnung zu schaffen, das für eine Verringerung der Schadstoffemissionen sorgt, solange die Verbrennungsmotoranordnung ihre Betriebstemperatur nicht erreicht hat.

Die Aufgabe wird erfindungsgemäß dadurch gelöst, dass anhand der von dem Kühlmittel-Temperatursensor gemessenen Kühlmittel-Temperatur, der von dem Ladelufttemperatur-Sensor gemessenen Ladelufttemperatur und der von dem Abgastemperatur-Sensor gemessenen Abgastemperatur eine späte Warmlaufphase detektiert wird. Diese späte Warmlaufphase liegt vor, solange die Kühlmittel-Temperatur unter einem festgelegten konstanten Grenzwert von über 70°C, die Abgastemperatur über einem festgelegten konstanten Grenzwert von über 200°C und die Ladelufttemperatur unter einem konstanten Grenzwert von mindestens 60°C liegt. Die späte Warmlaufphase liegt also nicht vor, wenn die Kühlmittel-Temperatur oberhalb des Kühlmitteltemperatur-Grenzwertes, die Abgastemperatur unterhalb des festgelegten Abgastemperatur- Grenzwertes oder aber die Ladelufttemperatur unterhalb ihres festgelegten Grenzwertes liegt.

Während der späten Warmlaufphase werden folgende Verfahrensschritte durchgeführt:
Der Kühlmittelkreislauf zur Kühlung des Verbrennungsmotors wird durch Betätigung des Kühlmittelkreislauf-Steuerelementes geschlossen. Hierdurch wird die Kühlmittel-Zirkulation weitgehend gestoppt. Das Kühlmittel-Steuerelement kann eine Kühlmittelpumpe, kann jedoch auch ein Kühlmittel-Ventil oder -Thermostat sein. Durch Schließen des Kühlmittelkreislaufes wird dem Verbrennungsmotor und damit dem Abgas möglichst wenig Wärme entzogen. Das Abgas ist während der späten Warmlaufphase der einzige Wärmeträger. Um die Abgas-Wärme in dieser Phase gezielt einsetzen zu können, wird die größte aktive Wärmesenke, nämlich der Kühlmittelkreislauf, außer Betrieb gesetzt.

Zu warme Ladeluft verschlechtert den Wirkungsgrad des Verbrennungsmotors und verursacht eine Erhöhung der Schadstoffemissionen. Daher wird während der späten Warmlaufphase der Ladeluft-Bypass durch Schließen des Ladeluft-Bypass-Ventils geschlossen. Die Ladeluft fließt durch den Ladeluftkühler und wird dort gekühlt.

Ferner wird während der späten Warmlaufphase das Steuerventil des Abgas-Motorschmiermittel-Wärmetauschers geöffnet, so dass in dieser Phase gezielt das Motorschmiermittel erwärmt wird. Hierdurch wird sicher gestellt, dass das Motorschmiermittel möglichst frühzeitig erwärmt wird, bevor der Verbrennungsmotor, die Nebenaggregate und die Fluide die Betriebstemperatur erreicht haben. Hierdurch werden die Reibungsverluste innerhalb des Verbrennungsmotors in der Warmlaufphase nach einem Kaltstart schnellstmöglich reduziert. Durch Verringerung der Reibungsverluste wird der Kraftstoff-Verbrauch entsprechend verringert, wodurch wiederum die Schadstoffemissionen während der Warmlaufphase schnellstmöglich reduziert werden.

Der Beginn der späten Warmlaufphase wird nur dann eingeleitet, wenn die Abgastemperatur einen konstanten Grenzwert von über 200 °C überschreitet. Eine derartige Schwelle zum Einleiten der späten Warmlaufphase und der damit verbundenen Verfahrensschritte ist deshalb sinnvoll, weil bei einer Abgastemperatur unterhalb des Grenzwertes von über 200 °C das Abgas nur relativ wenig Wärmemenge aufweist, um Motorschmiermittel von mehreren Litern nennenswert erwärmen zu können. Das Abgas mit einer Temperatur unterhalb der festgelegten Grenzwert-Temperatur zwischen 200°C und 400°C ist daher besser geeignet, zur schnellstmöglichen Verringerung der Abgas-Emissionen möglichst ungekühlt dem Abgaskatalysator zugeführt zu werden, damit dieser schnellstmöglich seine Betriebstemperatur erreicht.

Vorzugsweise liegt der Abgastemperatur-Grenzwert über 270 °C und liegt der Ladelufttemperatur-Grenzwert über 70 °C. Herkömmliche Abgaskatalysatoren beginnen unter Einsatz weiterer Maßnahmen bei Eigentemperaturen von 270 - 280°C zu arbeiten. Erst wenn diese Temperatur erreicht ist, ist es sinnvoll, dem in dieser Phase einzigen Wärmeträger, nämlich dem Abgas, weitere Wärme zur Erwärmung des Motorschmiermittels zu entziehen. Sobald die Ladelufttemperatur einen Grenzwert von über 70 °C überschreitet, was beispielsweise durch die Temperaturerhöhung der Ladeluft bei der Verdichtung im Ladeluft-Verdichter bewirkt wird, muss die Ladeluft durch Schließen des Ladeluft-Bypass-Ventils des Ladeluftkühlers gekühlt werden.

Gemäß einer bevorzugten Ausgestaltung ist bei einer Verbrennungsmotoranordnung, die über einen mit einem Kühler kühlbaren Abgaskrümmer verfügt, dem ein Kühlerventil zur Steuerung der Kühlung des Abgaskrümmers zugeordnet ist, während der späten Warmlaufphase vorgesehen, das Kühlerventil des Abgaskrümmers zu schließen, so dass der Abgaskrümmer aktiv nicht gekühlt wird. Auch die Kühlung des kühlbaren Abgaskrümmers wird während der späten Warmlaufphase also abgeschaltet.

Vorzugsweise ist bei der Verbrennungsmotor-Anordnung ferner ein Abgas-Getriebeschmiermittel-Wärmetauscher mit einem Steuerventil zur Steuerung der Erwärmung des Getriebeschmiermittels durch Abgas vorgesehen. Bei einer derartigen Verbrennungsmotor-Anordnung ist während der späten Warmlaufphase vorgesehen, das Steuerventil des Abgas-Getriebeschmiermittel-Wärmetauschers zu öffnen, so dass das Getriebeschmiermittel während der späten Warmlaufphase durch Abgas erwärmt wird. Insbesondere bei Automatik-Getrieben ist die Getriebeschmiermittel-Menge mit 10 Litern und mehr so groß, dass sie eine hohe absolute Wärmekapazität aufweist. Ohne einen Getriebeschmiermittel-Wärmetauscher erfolgt die Erwärmung durch die Motorwärme nur relativ langsam. Insbesondere bei Automatik-Getrieben ist kaltes Getriebeschmiermittel, das im kalten Zustand relativ zähflüssig ist, verantwortlich für relativ hohe Antriebsverluste. Durch die aktive Erwärmung des Getriebeschmiermittels in der späten Warmlaufphase werden die mechanischen Antriebsverluste nach einem Kaltstart des Verbrennungsmotors zeitlich erheblich reduziert, so dass auch der hierdurch verursachte Mehrverbrauch und die hierdurch wiederum verursachten Schadstoffemissionen entsprechend verringert werden.

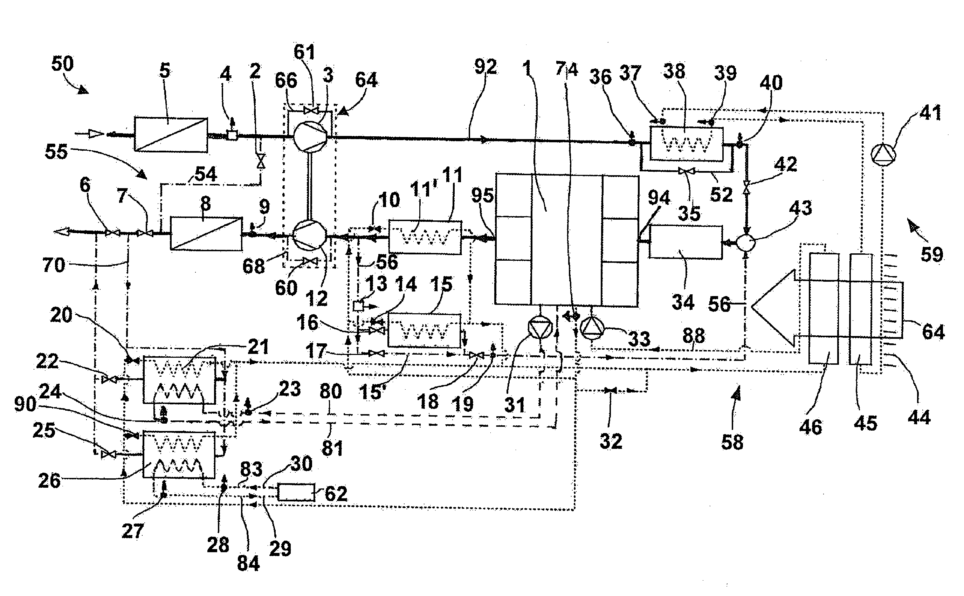

Die Zeichnung zeigt eine schematische Darstellung einer Verbrennungsmotor-Anordnung.

In der Figur ist schematisch eine komplexe Verbrennungsmotor-Anordnung 50 dargestellt. In der Anordnung 50 sind alle wesentlichen Aggregate dargestellt, die um den Verbrennungsmotor 1 herum mit der Ladeluft, dem Abgas, mehreren Kühlmittelkreisläufen sowie zwei Ölkreisläufen zu tun haben.

Frische Ladeluft wird durch einen Luftfilter 5 angesaugt und passiert anschließend einen Luftmassenmesser 4. Die angesaugte Ladeluft tritt anschließend in einen Ladeluft- Auflader 64 ein, in dem sie in einer Verdichterturbine 3 ggf. verdichtet wird. Die Ladeluft strömt anschließend zu einem mit einem Kühlmittel gekühlten Ladeluftkühler 38, dem ein Bypass 52 mit einem Bypass-Ventil 35 zugeordnet ist. Von dort strömt die Ladeluft durch das Gas-Steuerventil 42 in Form einer Drosselklappe zu einem Mischer 43, in dem die Ladeluft ggf. gemischt wird mit zurückgeführtem Abgas aus der Hochdruck- Abgasrückführung .

Von dem Mischer 43 gelangt die Ladeluft über das Saugrohr 34 und durch einen Ladeluft-Einlass 94 in den Verbrennungsmotor 1. Dort wird die Ladeluft mit Kraftstoff angereichert, und wird das auf diese Weise gewonnene Gemisch gezündet. Das dabei entstehende Abgas strömt aus einem Abgas-Auslass 95 aus dem Verbrennungsmotor 1 aus.

Das aus dem Auslass 95 austretende Abgas wird in einem wassergekühlten Abgaskrümmer 11 gekühlt und strömt mit seinem Hauptstrom weiter zu einer Antriebsturbine 12 des Ladeluft-Aufladers 64. Die Antriebsturbine 12 treibt die Verdichterturbine 3 an. Der Antriebsturbine 12 ist ein Bypass 68 mit einem Bypass-Ventil 60 und der Verdichterturbine 3 ist ein Bypass 66 mit einem Bypass-Ventil 61 zugeordnet. Von dem Ladeluft- Auflader 64 kommend passiert das Abgas einen Abgastemperatur-Sensor 9, der kurz vor einem Abgaskatalysator 8 angeordnet ist. Aus dem Abgaskatalysator 8 strömt das Abgas durch ein erstes Gas-Steuerungsventil 7 und ein zweites Gas-Steuerungsventil 6 in einen nicht dargestellten Auspuff. Der hier dargestellte Strom des Gases ist der Hauptgastrom vom Einlass des Luftfilters bis zum Auslass in einen Schalldämpfer bzw. den Auspuff.

Dieser Gas-Hauptstrom weist drei Verzweigungen auf, nämlich eine Niederdruck-Abgasrückführung, eine Hochdruck-Abgasrückführung sowie ein Abzweig für die Versorgung von zwei Drei-Wege-Wärmetauschern 21, 26.

Die Niederdruck-Abgasrückführung wird von einer Leitung 54 gebildet, die im Abgaszweig zwischen dem Abgaskatalysator 8 und dem ersten Gas-Steuerventil 7 abzweigt und in ihrem Verlauf ein Abgasrückführungs-Steuerventil 2 aufweist. Diese Abgasrückführungs-Leitung 54 mündet in den Ladeluftstrang vor dem Ladeluft-Auflader 64.

Ferner ist eine Hochdruck-Abgasrückführung vorgesehen, wobei die Hochdruck-Abgasrückführungs-Leitung 56 auf der Abgasseite zwischen dem wassergekühlten Abgaskrümmer 11 und dem Ladeluft- Auflader 64 abzweigt. Nach dem Abzweig ist im Verlauf der Leitung 56 ein Abgasmassen- und Temperatursensor 13 angeordnet, der die Abgasmasse und die Abgastemperatur an dieser Stelle detektiert. Der Abgasstrom strömt anschließend durch einen Hochdruck-Abgasrückführungs-Kühler 15, dem ein Gas-Steuerventil 16 vorgeschaltet ist. Ferner ist parallel zu dem Kühler 15 ein Bypass 15' vorgesehen, durch den das Abgas unter Umgehung des Kühlers 15 strömen kann, wenn die betreffenden Gas-Steuerventile 16, 17, 18 entsprechend geschlossen bzw. geöffnet sind. In dem Hochdruck-Abgasrückführungs-Kühler 15 kann das durch die Leitung 56 zurückgeführte Abgas bei Bedarf gekühlt werden, um die thermische Belastung des Verbrennungsmotors 1 und der im Abgas-Hauptstrom liegenden Aggregate zu reduzieren, und Stickoxide in dem Abgas zu verringern.

In Strömungsrichtung hinter dem Kühler 15 ist im Verlauf der Leitung 56 ein Hochdruck-Abgasrückführungs-Kühler-Sensor 19 angeordnet, mit dessen Hilfe die Kühlleistung des Abgasrückführungs-Kühlers 15 geregelt werden kann. Das Abgas strömt von dort aus in den Mischer 43, in dem die Ladeluft mit dem Abgas aus der Hochdruck-Abgasrückführungsleitung 56 gemischt wird.

Eine weitere Abgas-Leitung 70 zweigt im Abgas-Hauptstrom zwischen dem ersten Gas-Steuerventil 7 und dem zweiten Gas-Steuerventil 6 zu den zwei Drei-Wege-Wärmetauschern 21, 26 ab. In dem ersten Drei-Wege-Wärmetauscher 21 kann mit Hilfe des warmen Abgases ein Zielmedium erwärmt und mit Hilfe des ebenfalls eingespeisten Kühlmittels dasselbe Zielmedium bei Bedarf gekühlt werden. Beide Drei-Wege-Wärmetauscher weisen daher neben ihren Abgas-Einlässen auch Einlässe für das Kühlmittel auf. Der erste Drei-Wege-Wärmetauscher ist über eine Schmiermittel-Zuleitung 80 und -Ableitung 81 verbunden mit entsprechenden Schmiermittel-Anschlüssen des Verbrennungsmotors 1. In dem ersten Drei-Wege-Wärmetauscher 21 wird also das Verbrennungsmotor-Schmiermittel bei Bedarf durch das Kühlwasser gekühlt bzw. durch das Abgas erwärmt.

Der zweite Drei-Wege-Wärmetauscher 26 ist über eine Schmiermittel-Zuleitung 83 und eine Schmiermittel-Ableitung 84 mit einem Getriebe 62 verbunden. Durch die Schmiermittel- Zuleitung und -Ableitung 83, 84 und den zugeordneten Drei-Wege-Wärmetauscher 26 kann das Getriebe-Schmiermittel bei Bedarf gekühlt oder erwärmt werden. Dies ist insbesondere bei Automatik- Getrieben sinnvoll, in denen die Schmiermittelmenge häufig 10 Liter und mehr betragen kann, und von denen bei geringer Schmiermittel- Temperatur ein hoher Teil der Antriebsleistung absorbiert wird, und bei zu hoher Temperatur zuviel Schlupf auftritt.

Vorliegend sind zwei Kühlmittelkreisläufe vorgesehen, nämlich ein erster Hochtemperatur-Kühlmittelkreislauf 58 und ein zweiter Niedertemperatur-Kreislauf 59. Der Niedertemperatur-Kreislauf 59 dient der Kühlung des Ladeluftkühlers 38 und weist hierzu einen Niedertemperatur-Kühler 45 und eine Niedertemperatur-Kühlmittelpumpe 41 auf.

Der Hochtemperatur-Kühlmittelkreislauf 58 weist einen Kühler 46, eine Kühlmittel-Pumpe 33 sowie eine Vielzahl von Leitungen und Ventilen auf. Der Kühlmittel-Hauptstrom läuft vom Kühler 46 aus kommend durch eine Kühlmittel-Leitung 88 zu der Kühlmittel-Pumpe 33, die bei Betrieb das Kühlmittel in den Verbrennungsmotor 1 pumpt. Das aus dem Verbrennungsmotor 1 ausströmende Kühlmittel strömt an einem Kühlmittel-Temperatursensor 74 vorbei durch ein Kühlmittel -Steuerventil 32 zurück zu dem Kühler 46.

Zwischen dem Kühlmittel- Auslass des Verbrennungsmotors 1 und dem Kühlmittel-Steuerventil 32 zweigen mehrere Kühlmittel-Leitungen zu dem Abgaskrümmer-Kühler 11, dem Hochdruck-Abgasrückführungs-Kühler 15, zu dem ersten Drei-Wege-Wärmetauscher 21 und zu dem zweiten Drei-Wege-Wärmetauscher 26 ab, um von dort aus jeweils in den Kühlmittel-Kühler 46 zurückzuströmen.

Die Kühlmittelströme werden mit Hilfe von Steuerventilen 10, 14, 20, 90 dem Bedarf entsprechend gesteuert bzw. geregelt.

Im Verlauf der Schmiermittel-Leitungen 80, 81, 83, 84 sind jeweils vor und hinter dem Drei-Wege-Wärmetauschern 21, 26 Temperatursensoren 22, 24, 27, 28 angeordnet, mit deren Hilfe die betreffende Schmiermittel-Temperatur geregelt werden kann.

Die beiden Kühler 45, 46 der beiden Kühlmittel-Kreisläufe werden durch von außen einströmende Kühlluft 64 gekühlt, die dabei durch eine verschließbare Kühlluft-Jalousie 44 hindurch tritt.

Die späte Warmlaufphase des Verbrennungsmotors 1 läuft wie folgt ab:
Von einer nicht dargestellten zentralen Motorsteuerung werden unter anderem die Signale des Kühlmittel- Temperatursensors 74, des Ladeluft-Temperatursensors 36, der dem Ladeluftkühler 38 zugeordnet ist, und des Abgastemperatur-Sensors 9 vor dem Abgaskatalysator 8 ständig überwacht. Wenn die Kühlmittel- Temperatur unter einem festgelegten konstanten Grenzwert von über 70°C, die Abgastemperatur über einen festgelegten Grenzwert von 280 °C und die Ladelufttemperatur oberhalb eines Grenzwertes von 80 °C liegt, liegt für die Motorsteuerung eine späte Warmlaufphase vor, in der bestimmte Verfahrensschritte durchgeführt werden.

In dieser späten Warmlaufphase liegt die Abgastemperatur oberhalb der Betriebstemperatur des Abgaskatalysators 8. Der Abgaskatalysator 8 arbeitet bereits effektiv und reinigt auf diese Weise das austretende Abgas im hohen Maße von Schadstoffen. Im übrigen sind alle Aggregate und Fluide der Anordnung 50 noch nicht auf Betriebstemperatur.

In der späten Warmlaufphase bleibt der Kühlmittelkreislauf 58 durch entsprechende Betätigung bzw. Stellung der betreffenden Kühlmittelkreislauf-Steuerelemente 32, 33 geschlossen. Eine Kühlmittel-Zirkulation, die eine aktive Kühlung des Verbrennungsmotors 1 und anderer an dem Kühlkreislauf 58 angeschlossener Aggregate bewirken würde, findet in dieser späten Warmlaufphase nicht statt.

Ferner wird in der späten Warmlaufphase das Bypass-Ventil 35, das den Ladeluft-Bypass steuert, geschlossen. Die Ladeluft strömt also durch den Ladeluftkühler 38, so dass die Ladeluft im Ladeluftkühler 38 entsprechend gekühlt wird.

Ferner wird in der späten Warmlaufphase durch die Motorsteuerung das Steuerventil 22 des Abgas-Motorschmiermittel-Wärmetauschers 21 geöffnet, um in der späten Warmlaufphase das Motorschmiermittel aktiv mit Hilfe der Wärme des Abgases zu erwärmen. Hierdurch wird die durch das noch nicht auf Betriebstemperatur erwärmte Motorschmiermittel erhöhte Reibung innerhalb des Verbrennungsmotors 1 schnell verringert, da das Motorschmiermittel bevorzugt und gezielt bis zum Erreichen seiner Betriebstemperatur erwärmt wird.

Durch das schnellere Erwärmen des Motorschmiermittels und die daraus resultierende schnellere Verringerung der Reibung innerhalb des Verbrennungsmotors 1 wird die mechanische Verlustleistung innerhalb des Verbrennungsmotors 1 reduziert, so dass wiederum der Kraftstoffverbrauch und damit ebenfalls die Schadstoffemissionen reduziert werden.

In der späten Warmlaufphase wird ferner das Kühlerventil 10 des Abgaskrümmer-Kühlers 11' geschlossen, so dass auch der Abgaskrümmer 11 in der späten Warmlaufphase nicht aktiv gekühlt wird.

Gleichzeitig kann, muss jedoch nicht, in der späten Warmlaufphase der Getriebeschmiermittel-Wärmetauscher 26 durch entsprechendes Öffnen des Steuerventils 25 in Betrieb genommen werden, so dass in dieser Phase auch das Getriebeschmiermittel aktiv und gezielt erwärmt und auf diese Weise schneller auf Betriebstemperatur gebracht wird. Eine aktive Erwärmung des Getriebeschmiermittels in der späten Warmlaufphase ist insbesondere dann von Bedeutung, wenn das Fahrzeug-Getriebe ein automatisches Getriebe ist. Ein automatisches Getriebe weist bei Getriebeschmiermittel-Temperaturen unterhalb der Betriebstemperatur erhebliche Reibungsverluste auf. Unter Getriebeschmiermittel ist vorliegend auch das Transmissionsfluid eines automatischen Fahrzeug-Getriebes zu verstehen.

Die vorliegende Darstellung einer Verbrennungsmotor-Anordnung 50 ist exemplarisch. Die Abgasrückführung kann als Hochdruck-Abgasrückführung, als Niederdruck-Abgasrückführung oder als kombinierte Hochdruck-Niederdruck-Abgasrückführung ausgebildet sein.

Für den Fall einer Hochdruck-Abgasrückführung ist während der späten Warmlaufphase auch der Abgasrückführungs-Kühler 15 abgeschaltet, d. h. das rückgeführte Abgas wird nicht gekühlt.

Der Abgas-Motorschmiermittel-Wärmetauscher kann zusammen mit dem Abgasrückführungskühler 15 in einem einzigen Kombinations-Wärmetauscher kombiniert sein. Die Entnahme des Abgases für den Abgas-Motorschmiermittel-Wärmetauscher muss nicht hinter dem Abgaskatalysator 8 erfolgen, sondern kann auch unmittelbar hinter dem Abgaskrümmer 11 und vor dem Ladeluft-Auflader 64 bzw. seiner Antriebsturbine 12 erfolgen.

Entscheidend ist, dass in der späten Warmlaufphase das Abgas als einziger Wärmeträger ausschließlich zum Erwärmen des Abgaskatalysators und des Motorschmiermittels genutzt wird. Alle übrigen Wärmesenken für das Abgas sind abgeschaltet, soweit dies möglich und für die Anordnung bzw. den Verbrennungsmotor nicht schädigend ist.

## Patentansprüche

1. Verfahren zur Steuerung einer Kraftfahrzeug-Verbrennungsmotor-Anordnung (50) mit
einem Verbrennungsmotor (1) mit einem Ladeluft-Einlass (94) und einem Abgas- Auslass (95),
einem Kühlmittelkreislauf (58) mit einem Kühlmittel-Temperatursensor (74) und einem Steuerelement (32,33) zur bedarfsweisen Steuerung der Kühlung des Verbrennungsmotors (1),
einem mit dem Auslass (95) verbundenen Abgaskatalysator (8) und einem Abgastemperatur-Sensor (9) vor dem Abgaskatalysator (8),
einem Ladeluft-Auflader (64) mit einer Antriebsturbine (12) und einer Verdichterturbine (3),
einem geregelten Ladeluftkühler (38) zwischen der Verdichterturbine (3) und dem Einlass (94), wobei dem Ladeluftkühler ein Bypass (52) mit einem Bypass-Ventil (35) zugeordnet ist und vor dem Ladeluftkühler (38) ein Ladeluft-Temperatursensor (36) angeordnet ist, und
einem Abgas-Motorschmiermittel-Wärmetauscher (21) mit einem ihm zugeordneten Abgas-Steuerventil (22) zu Steuerung des Abgasstromes durch den Wärmetauscher (21),
mit den folgenden Verfahrensschritten:
Bestimmung der Kühlmittel-Temperatur mit dem Kühlmittel-Temperatursensor (74), der Ladelufttemperatur mit dem Ladelufttemperatur-Sensor (36) und der Abgastemperatur mit dem Abgastemperatur-Sensor (9),
wenn die Kühlmittel-Temperatur unter einem festgelegten Grenzwert von über 70°C, die Abgastemperatur über einem festgelegten Grenzwert von über 200°C und die Ladelufttemperatur oberhalb eines festgelegten Grenzwertes von über 60°C liegt, wodurch eine späte Warmlaufphase definiert ist:
Schließen des Kühlmittelkreislaufes (58) durch Betätigung des Kühlmittelkreislauf-Steuerelementes (32,33),
Schließen des Ladeluft- Bypass (52) durch Schließen des Bypass-Ventils (35), und
Öffnen des Steuerventils (22) des Abgas-Motorschmiermittel-Wärmetauschers (21) zum Erwärmen des Motorschmiermittels

2. Verfahren zur Steuerung einer Kraftfahrzeug-Verbrennungsmotor-Anordnung (50) nach Anspruch 1, **dadurch gekennzeichnet, dass** der Abgastemperatur-Grenzwert über 270°C und der Ladelufttemperatur- Grenzwert über 70°C liegt.

3. Verfahren zur Steuerung einer Kraftfahrzeug-Verbrennungsmotor-Anordnung (50) nach Anspruch 1 oder 2 mit einem Abgaskrümmer (11) mit einem Kühler (11') und einem Kühlerventil (10), mit dem Verfahrensschritt während der späten Warmlaufphase: Schließen des Kühlerventils (10).

4. Verfahren zur Steuerung einer Kraftfahrzeug-Verbrennungsmotor-Anordnung (50) nach einem der Ansprüche 1 bis 3, mit einem Abgas-Getriebeschmiermittel- Wärmetauscher (26) mit einem Steuerventil (25), mit dem Verfahrenschritt während der späten Warmlaufphase: Öffnen des Steuerventils des Abgas-Getriebeschmiermittel-Wärmetauschers (26).

## Claims

1. Method for controlling a motor vehicle combustion engine assembly (50) comprising
an internal combustion engine (1) with a charge air inlet (94) and an exhaust gas outlet (95),
a coolant circuit (58) with a coolant temperature sensor (74) and a control element (32, 33) for a controlling the cooling of the internal combustion engine (1) as required,
an exhaust gas catalytic converter (8) connected with the outlet (95) and an exhaust gas temperature sensor (9) upstream of the exhaust gas catalytic converter (8),
a turbocharger (64) with a driving turbine (12) and a compressor turbine (3),
a controlled charge-air intercooler (38) arranged between the compressor turbine (3) and the inlet (94), the charge-air intercooler being associated to a bypass (52) with a bypass valve (35), and a charge-air temperature sensor (36) is provided upstream of the charge-air intercooler (38), and
an exhaust gas/engine lubricant heat exchanger (21) with an exhaust gas control valve (22) associated to the same for controlling the exhaust gas flow through the heat exchanger (21),
the method comprising the following steps:
determining the coolant temperature by means of the coolant temperature sensor (74), the charge air temperature by means of the charge-air temperature sensor (36) and the exhaust gas temperature by means of the exhaust gas temperature sensor (9),
if the coolant temperature is below a defined limit value higher than 70°C, the exhaust gas temperature is above a defined limit value higher than 200°C, and the charge air temperature is above a defined limit value higher than 60°C, whereby a late warm-up period is defined,
closing the coolant circuit (58) by actuating the coolant circuit control element (32, 33),
closing the charge air bypass (52) by closing the bypass valve (35), and
opening the control valve (22) of the exhaust gas/engine lubricant heat exchanger (21) in order to heat up the engine lubricant.

2. Method for controlling a motor vehicle combustion engine assembly (50) of claim 1, **characterized in that** the limit value for the exhaust gas temperature is above 280°C and the limit value for the charge air temperature is above 70°C.

3. Method for controlling a motor vehicle combustion engine assembly (50) of claim 1 or 2, comprising an exhaust gas manifold (11) with a cooler (11') and a cooler valve (10), including the following method step during the late warm-up period: closing the cooler valve (10).

4. Method for controlling a motor vehicle combustion engine assembly (50) of one of claims 1 to 3, comprising an exhaust gas/gearing lubricant heat exchanger (26) with a control valve (25), including the following method step during the late warm-up period: opening the control valve of the exhaust gas/gearing lubricant heat exchanger (26).

## Revendications

1. Procédé de commande d'un agencement (50) d'un moteur à combustion de véhicule automobile, comprenant
un moteur à combustion (1) avec une entrée de l'air de suralimentation (94) et une sortie de gaz d'échappement (95),
un circuit de refroidissement (58) avec un capteur de température de la liquide de refroidissement (74) et un élément de commande (32, 33) pour commander au besoin le refroidissement dudit moteur à combustion (1),
un convertisseur catalytique (8) raccordé à ladite sortie (95), et un capteur de température des gaz d'échappement (9) en amont dudit convertisseur catalytique (8),
un turbocompresseur (64) avec une turbine d'entrainement (12) et une turbine de compression (3),
un refroidisseur d'air de suralimentation (38) réglé, situé entre ladite turbine de compression (3) et ladite entrée (94), ledit refroidisseur d'air de suralimentation (38) étant associé à un moyen de contournement (52) comprenant une vanne de contournement (35), un capteur de température d'air de suralimentation (36) étant situé en amont dudit refroidisseur d'air de suralimentation (38), et
un échangeur de chaleur de gaz d'échappement/lubrifiant de moteur (21) avec une vanne de commande des gaz d'échappement (22) associée à celui-ci pour la commande de l'écoulement des gaz d'échappement à travers ledit échangeur de chaleur (21),
comprenant les étapes suivantes:
déterminer la température du liquide de refroidissement à l'aide dudit capteur de température de la liquide de refroidissement (74), la température de l'air de suralimentation à l'aide dudit capteur de température d'air de suralimentation (36), et la température des gaz d'échappement à l'aide dudit capteur de température des gaz d'échappement (9),
si la température du liquide de refroidissement est inférieure à une valeur limite fixe supérieure à 70°C, la température de l'air de suralimentation dépasse une valeur limite fixe supérieure à 200°C, et la température des gaz d'échappement dépasse une valeur limite fixe supérieure à 60°C, ainsi définissant une phase de préchauffage tarde:
fermer ledit circuit de refroidissement (58) par actuation dudit élément de commande (32, 33) dudit circuit de refroidissement,
fermer ledit moyen de contournement (52) de l'air de suralimentation par fermeture de ladite vanne de contournement (35), et
ouvrir ladite vanne de commande (22) dudit échangeur de chaleur de gaz d'échappement/lubrifiant de moteur (21) pour chauffer le lubrifiant de moteur.

2. Procédé de commande d'un agencement (50) d'un moteur à combustion de véhicule automobile selon la revendication 1, **caractérisé en ce que** la valeur limite la température des gaz d'échappement est supérieure à 270°C et ladite valeur limite de la température de l'air de suralimentation est supérieure à 70°C.

3. Procédé de commande d'un agencement (50) d'un moteur à combustion de véhicule automobile selon les revendications 1 ou 2, ayant un collecteur de gaz d'échappement (11) avec un refroidisseur (11') et une vanne de refroidisseur (10), comprenant l'étape, pendant la phase de préchauffage tarde, de fermer ladite vanne de refroidisseur (10).

4. Procédé de commande d'un agencement (50) d'un moteur à combustion de véhicule automobile selon l'une quelconque des revendications 1 à 3, ayant un échangeur de chaleur de gaz d'échappement/lubrifiant d'engrenage (26) avec une vanne de commande (25), comprenant l'étape, pendant la phase de préchauffage tarde, d'ouvrir ladite vanne de commande dudit échangeur de chaleur de gaz d'échappement/lubrifiant d'engrenage (26).
